# EUROPÄISCHE PATENTANMELDUNG

(11) **EP 1 806 302 A1**
(43) Veröffentlichungstag der Anmeldung: **11.07.2007**
(21) Anmeldenummer: 06000212.8
(22) Anmeldetag: 05.01.2006
(51) Int. Cl.: B65G 1/04, B65G 1/137

(54) **Vorrichtung und Verfahren für ein Verlagern von Waren, insbesondere Kommisionieren**

(71) Anmelder: von Liechtenstein, Alexander, 9497 Triesenberg (LI)
(72) Erfinder: von Liechtenstein, Alexander, 9497 Triesenberg (LI)
(74) Vertreter: Grünecker, Kinkeldey, Stockmair & Schwanhäusser Anwaltssozietät

(57) **Zusammenfassung**

Die vorliegende Erfindung bezieht sich auf eine Vorrichtung (1) für ein Verlagern von Waren (2) von oder zu einer Warenaufbewahrungsfläche (3). Die Vorrichtung (1) ist an einem beweglichen Gestell (4) angebracht. Ferner weist die Vorrichtung einen horizontalen Warenaufnahmebereich (5) auf, dem eine Fördereinrichtung (6) zugeordnet ist. Die erfindungsgemäße Vorrichtung zeichnet sich dadurch aus, dass die Fördereinrichtung (6) ein Förderband mit einer Förderrichtung (F) ist. Darüber hinaus stellt die Erfindung auch ein Verfahren zum Verlagern von Waren (2) zur Verfügung. Das Verlagern von Waren (2) wird mit Hilfe von Greifern (16) senkrecht zur Förderrichtung (F) durchgeführt, wonach die Waren (2) in seitliche Bereiche des Förderbands (6) verfahren werden, um in der Mitte Platz für neue Waren (2) zu machen.

## Beschreibung

Die vorliegende Erfindung bezieht sich auf eine Vorrichtung für ein Verlagern von Waren gemäß dem Oberbegriff des Anspruchs 1 sowie auf ein damit zu betreibendes Verfahren.

Eine solche Vorrichtung, die aus der Praxis bekannt ist, findet Verwendung in automatisierten Lagersystemen, beispielsweise Hochregallagern. Solche Lagersysteme stellen mehrere übereinander angeordnete Warenaufbewahrungs- oder Lagerflächen zur Verfügung, auf denen Waren abgelegt und gelagert werden können. Um dieses Lagersystem automatisiert betreiben zu können, ist eine bewegliche und ansteuerbare Vorrichtung zum Verlagern von Waren vorgesehen, insbesondere also zum Ein-, Aus- und/oder Umlagern von Waren. Mittels dieser Vorrichtung können die Waren an beliebige Stellen innerhalb des Lagersystems gebracht, dort abgelegt und zu einem späteren Zeitpunkt wieder von dort entnommen werden.

Zum Verlagern der Waren sind für solche Lagersysteme ebenfalls aus der Praxis Vorrichtungen bekannt, die vor den übereinander angeordneten Lagerflächen verfahren werden können. Diese Verlagerungsvorrichtungen werden durch ein bewegliches Gestell so verfahren, dass ein Tisch dieser Verlagerungsvorrichtung vor eine bestimmte Lagerfläche verfahren werden kann. Dann fährt ein Sauggreifer von seiner inaktiven Position über den Tisch bis zur Lagerfläche vor, saugt die vorbestimmte Ware an und zieht sie von der Lagerfläche auf den Tisch. Dann verfährt die gesamte Verlagerungsvorrichtung zu einer Abgabestation. Während des gesamten Vorgangs ist die Saugfunktion des Greifers aktiv.

Nachteilig an der bekannten Verlagerungsvorrichtung ist, dass pro Verlagerungsvorgang nur eine Wareneinheit auf dem Tisch abgelegt und verlagert werden kann.

Aufgabe der vorliegenden Erfindung ist es, die bekannte Vorrichtung zum Verlagern von Waren mit konstruktiv möglichst einfachen Mitteln hinsichtlich ihrer Funktionsmöglichkeiten zum Verlagern von Waren zu verbessern.

Darüber hinaus soll auch ein geeignetes Verfahren zum Betreiben eines entsprechenden Lagersystems bereitgestellt werden.

Diese Aufgabe wird gelöst durch eine Vorrichtung mit den Merkmalen des Anspruchs 1 bzw. durch ein Verfahren mit den Merkmalen des Anspruchs 31.

Wie oben erläutert, kann bei herkömmlichen Vorrichtungen zum Verlagern von Waren die Warenentnahme von einer Lagerfläche eines Lagersystems und die anschließende Übergabe an eine Abgabestation nur jeweils für eine Wareneinheit separat erfolgen. Sollen mehrere Wareneinheiten aus dem Lagersystem entnommen werden, muss die Verlagerungsvorrichtung entsprechend oft von der auszulagernden Position zu der Abgabestation verfahren werden. Von diesem Konzept unterscheidet sich die vorliegende Erfindung grundlegend, indem sie die gleichzeitige Aufnahme mehrerer Wareneinheiten in der Verlagerungsvorrichtung ermöglicht. Anstatt eines Tisches wird erfindungsgemäß eine Fördereinrichtung in Form eines Förderbandes eingesetzt. Wenn die Ware von der Lagerfläche in den Warenaufnahmebereich gezogen wurde, kann das Förderband um einen vorbestimmten Weg horizontal verfahren werden, um somit den nächsten freien Warenaufnahmebereich für die nachfolgende Auslagerung zur Verfügung zu stellen. Dieser Vorgang kann bei Bedarf so oft wiederholt werden, bis die gesamte Aufnahmefläche des Förderbandes eingesetzt wurde. Dann verfährt die Verlagerungsvorrichtung zu einer Abgabestation.

Ein Vorteil der Erfindung liegt darin, dass gleichzeitig mehrere Wareneinheiten von dem Förderband des Warenaufnahmebereiches aufgenommen werden können. Als Konsequenz daraus ergibt sich der weitere Vorteil, dass viele Verfahrwege zum Auslagern der einzelnen Wareneinheiten durch einen einzigen Vorgang ersetzt werden. Die Auslagerung der Waren kann daher schneller durchgeführt werden, so dass beim erfindungsgemäßen Lagersystem mit höherer Frequenz Waren ausgelagert werden können. Ein mindestens ebenso großer Vorteil der Erfindung besteht darin, dass durch die Möglichkeit der Aufnahme mehrerer Waren auf dem Förderband des Warenaufnahmebereiches ein Kommissionieren, d.h. Zusammenstellung verschiedener Waren eines Auftrags, möglich ist. Entsprechend sinkt der Zeitbedarf für die Zusammenstellung eines Auftrags, der aus mehreren Waren besteht. Durch den in sich verfahrbaren Warenaufnahmebereich senkt die erfindungsgemäße Verlagerungsvorrichtung die Auslager- und Kommissionierkosten erheblich.

Der Warenaufnahmebereich weist ein Förderband auf, dessen Funktion auch von anderen Linearförderern wie z.B. Kugel- oder Rollenbahnen sowie Luftkissenförderern ausgeführt werden kann. In einer besonders vorteilhaften Ausführungsform ist das Förderband so an der Vorrichtung montiert, dass die Förderrichtung parallel zu der Verfahrrichtung des Gestells ist. Ein Antrieb kann das Förderband sowohl vorwärts, als auch rückwärts laufen lassen und somit auch durch schnelles Umschalten zwischen diesen beiden Förderrichtungen eine alternierende Bewegung des Förderbandes ausführen. Eine solche Variante ist besonders vorteilhaft bei quaderförmigen Waren, die übereinander auf dem Förderband liegen. Durch die alternierende Bewegung des Förderbandes in kurzen Zeitintervallen werden die mit dem Förderband in Kontakt stehenden Waren ebenfalls bewegt, wodurch wiederum die auf diesen Waren liegenden weiteren Waren verschoben werden und auf das Förderband fallen, so dass sie dann auch einen direkten Kontakt zum Förderband haben. Besonders vorteilhaft ist bei dieser Ausführungsform, dass sich die Waren durch die schnelle Bewegung des Förderbandes nicht auf einen Aufnahmebereich konzentrieren und dort anhäufen können.

Besonders vorteilhaft ist es, wenn das Förderband als Kommissioniereinrichtung für Waren verwendet wird. Denn die Vorrichtung bietet die Möglichkeit, mehrere Wareneinheiten eines Auftrags, der aus gleichartigen oder verschiedenen Waren bestehen kann, während eines Arbeitsganges zu sammeln und erst zu einer Auslagerstation zu fahren, wenn alle vorhandenen Waren eines Auftrags auf dem Förderband liegen. Sollte ein Auftragsvolumen größer sein als die durch das Förderband aufnehmbare Kapazität, kann die Vorrichtung auch zusätzliche Arbeitsschritte zur Auslagerung ausführen.

Günstig ist es, wenn das Förderband eine ebene Fläche aufweist, um ein unbeabsichtigtes und unkontrolliertes Verrutschen der Waren zu vermeiden. Es hat sich als sehr vorteilhaft erwiesen, die Aufnahmefläche des Förderbandes mit einem die Haftreibungseigenschaft erhöhendem Material zu versehen. Somit verbleiben die Waren zuverlässiger in ihrer Position auf dem Förderband und können nicht von diesem herabfallen.

Günstig ist es, wenn das Förderband an wenigstens einer seiner vier Flanken eine seitliche Raumbegrenzung aufweist. Vorteilhafterweise ist diese Raumbegrenzung eine seitliche Begrenzungswand. Die Begrenzungswand dient als Anschlag für die auf das Förderband fallende Ware und verhindert somit, dass die Waren von dem Förderband hinunterfallen können. Außerdem kann die Fläche dieser Begrenzungswand zur Ausrichtung der Waren dienen. Besonders vorteilhaft ist es, wenn die seitliche Begrenzungswand an einer Flanke des Förderbandes angebracht ist, die gegenüber der Warenaufbewahrungsfläche liegt. Werden Waren von dieser Warenaufbewahrungsfläche ausgestoßen, wird die Bewegung der Ware durch die Begrenzungswand gestoppt und die Ware bleibt auf dem Förderband liegen. Um diese Funktion über die gesamte Längenausdehnung des Förderbandes zu gewährleisten, erstreckt sich die seitliche Begrenzungswand bevorzugt über die gesamte Länge des Förderbandes.

Besondere Vorteile hat die Erfindung dann, wenn bei dieser Vorrichtung wenigstens ein Sensor eingesetzt wird, der einen bestimmten Kontrollpunkt oder einen ein-, zwei- oder dreidimensionalen Kontrollraum des Warenaufnahmebereiches überwacht. Dazu wird vorteilhafterweise ein Sensor senkrecht zu der Förderrichtung ausgerichtet und an einer seitlichen Begrenzungswand angebracht. Vorteilhafterweise sind als Sensor eine oder mehrere Lichtschranken vorgesehen, deren Lichtstrahl jeweils einen oder mehrere Bereiche des Warenaufnahmebereiches abtastet. Insbesondere wird der Endabschnitt des Warenaufnahmebereiches überwacht. Während des Betriebs der Vorrichtung sendet das optisch/elektronische System einen Lichtstrahl, der von einem Sensor empfangen wird. Es können sowohl Einweglichtschranken, als auch Reflexlichtschranken eingesetzt werden. Wenn eine Ware auf dem Förderband bewegt wird und den Lichtstrahl zwischen Sender und Empfänger unterbricht oder stört, gibt der Sensor ein entsprechendes Signal aus.

Denkbar ist es, dass mehrere Warenaufnahmebereiche in einer Vorrichtung übereinander angebracht werden können, um somit die Warentransportzeiten noch weiter zu reduzieren.

Vorteilhaft ist es, wenn die Fördereinrichtung bündig an die Warenaufbewahrungsfläche heranfahrbar ist, damit die Waren direkt von der Warenaufbewahrungsfläche auf das Förderband transportiert werden können.

Es hat sich als sehr vorteilhaft erwiesen, eine Verbindungsoberfläche zwischen der Warenaufbewahrungsfläche und der Fördereinrichtung vorzusehen. Eine solche Anordnung bringt insbesondere einen Konstruktions-, Fertigungs- und Montagenutzen. Durch diese Verbindungsoberfläche können maßliche Abweichungen zwischen der Warenaufbewahrungsfläche und der Fördereinrichtung ausgeglichen werden.

Besonders vorteilhaft ist es, wenn die Verbindungsoberfläche in Richtung der Fördereinrichtung geneigt ausgebildet ist. Denn dann können die Waren von der Warenaufbewahrungsfläche über die Verbindungsoberfläche auf die Fördereinrichtung gleiten und eine Zeitersparnis bei dem Transportvorgang begründen. Dies ist besonders der Fall, wenn die Verbindungsoberfläche bündig an die Warenaufbewahrungsfläche herangefahren wird, so dass sich kein Zwischenraum bilden kann.

Denkbar ist es, dass die Fördereinrichtung eine in etwa vertikale Schwenkachse aufweist, um welche die Fördereinrichtung zwischen einer ersten Endstellung und einer zweiten Endstellung schwenkbar ist. Dadurch ist es möglich, die in einer bestimmten Orientierung eingelagerten Waren von der Warenaufbewahrungsfläche auf die Fördereinrichtung zu transportieren und sie dann durch Schwenken der Fördereinrichtung in einer geänderten Richtung weiter zu transportieren. In einer besonders günstigen Variante beträgt der Schwenkwinkel zwischen der ersten Endstellung und der zweiten Endstellung in etwa 90°. Eine solche Variante ist besonders vorteilhaft bei Waren mit quaderförmigen Abmessungen, die während des Transports auf dem Förderband bestimmte Positionen zueinander einnehmen sollen.

In einer einfachen Variante der Erfindung hat die Fördereinrichtung insgesamt eine im Wesentlichen rechteckige Form.

Vorteilhaft ist es, wenn die Schwenkachse am Rand der Fördereinrichtung oder außerhalb der Fördereinrichtung angeordnet ist. Auf diese Weise kann sichergestellt werden, dass die Fördereinrichtung möglichst dicht an die Warenaufbewahrungsfläche oder an eine Ausgabestation herangefahren werden kann, ohne dass die Gefahr besteht, dass die Fördereinrichtung und die Warenaufbewahrungsfläche miteinander kollidieren. Alternativ dazu kann der gleiche Effekt erzielt werden, indem sichergestellt wird, dass die Fördereinrichtung in einer Ebene leicht oberhalb oder leicht unterhalb der Warenaufbewahrungsfläche verschwenkt wird, um ebenfalls eine Kollision auszuschließen.

Um den zum Schwenken benötigten Raum klein zu halten, sollte die Schwenkachse bevorzugt nahe oder in einer Ecke der Fördereinrichtung angeordnet sein. Je kleiner auf diese Weise der zum Schwenken benötigte Raum wird, desto größer kann die Warenaufbewahrungsfläche gestaltet werden.

Günstig ist es, wenn die erfindungsgemäße Vorrichtung mindestens eine Warenverlagerungseinrichtung aufweist. Diese Warenverlagerungseinrichtung kann dann die Funktion übernehmen, die Waren von der Warenaufbewahrungsfläche zu der Fördereinrichtung zu transportieren. Damit die Waren während jeder Endstellung der Fördereinrichtung bewegt werden können, ist die Warenverlagerungseinrichtung an die Schwenkbewegung der Fördereinrichtung gekoppelt. Bei geeigneter Ausbildung könnte die Warenverlagerungseinrichtung die Ware während der Schwenkbewegung der Fördereinrichtung festhalten, um auf diese Weise zu verhindern, dass die Ware beim Schwenken unbeabsichtigt von der Fördereinrichtung herabfällt.

Denkbar ist es, dass die Warenverlagerungseinrichtung eine Vorrichtung zum temporären Fixieren einer Ware aufweist. Möglich wäre es, dafür eine Greifvorrichtung vorzusehen. Besonders geeignet ist jedoch eine Ansaugvorrichtung, mit der eine Ware angesaugt und festgehalten werden kann. Es ist auch möglich, die Ansaugvorrichtung zum Ausstoßen der Waren einzusetzen. Somit kann die Ansaugvorrichtung nicht nur Waren von der Warenaufbewahrungsfläche auf die Fördereinrichtung ziehen, sondern auch von der Fördereinrichtung auf die Warenaufbewahrungsfläche stoßen. Diese Doppelfunktion der Ansaugvorrichtung ermöglicht also sowohl das Auslagern, als auch das Einlagern der Waren von oder zu einer Warenaufbewahrungsfläche.

Besonders vorteilhaft ist es, wenn die Vorrichtung eine Steuerungseinheit aufweist, die die Signale der Lichtschranken verarbeitet und die Bewegung der Fördereinrichtung steuert. Gelangt z.B. eine Ware in den Kontrollraum eines Sensors, der den Endbereich der Fördereinrichtung überwacht, so stoppt die Steuerungseinheit die Bewegung der Fördereinrichtung und verhindert somit ein Herabfallen der Waren von der Fördereinrichtung. Die Steuerungseinheit kann dann sogar die Bewegungsrichtung der Fördereinrichtung ändern, so dass die Ware von dem Endbereich der Fördereinrichtung in Richtung des anderen Endbereichs verfahren werden kann.

Die Erfindung umfasst ferner auch ein Verfahren für ein Verlagern von Waren. Das Verfahren zeichnet sich dadurch aus, dass mehrere auf einer Warenaufbewahrungsfläche befindliche Waren in zeitlichem Abstand von der Warenaufbewahrungsfläche in den Warenaufnahmebereich einer Vorrichtung abgelegt werden und die Waren dann mittels eines Förderbandes in seitliche Bereiche des Warenaufnahmebereichs verfahren werden. Somit bleibt der Abschnitt des Warenaufnahmebereiches auf dem Förderband immer frei von Waren und mehrere Warenverlagerungsvorgänge werden ermöglicht.

Besondere Vorteile bietet eine Steuerungseinheit, die Signale von Sensoren, welche an einer Vorrichtung angebracht sind, in Abhängigkeit von verschiedenen Betriebszuständen verarbeitet. Der Einsatz einer Steuerungseinheit hat den Vorteil, dass die Vorrichtung verschiedene programmierte Warenverlagerungsvorgänge verarbeiten kann.
So geben während eines vorbestimmten Kommissioniermodus die an dem Förderband angebrachten Lichtschranken ein Signal zum Anhalten des Förderbandes aus, wenn Ware den Warenaufnahmebereich überschreitet. Die Ware kann dann den Warenaufnahmebereich nicht verlassen und somit auch nicht von dem Förderband herabfallen.

Besonders vorteilhaft ist es, dass an dem Förderband angebrachte Lichtschranken während eines vorbestimmten Auslagerungsmodus kein Signal zum Anhalten des Förderbandes ausgeben, wenn Ware den Warenaufnahmebereich überschreitet. Somit kann die Ware ungehindert das Förderband an einer Ausgabestation verlassen. Alternativ dazu können zwar die Lichtschranken ein Signal zum Anhalten des Förderbandes ausgeben, wenn Ware den Warenaufnahmebereich überschreitet, die Steuerungseinheit ignoriert aber dieses Signal und führt einen programmierten Auslagerungsmodus, bei dem Waren von dem Förderband an eine Ausgabestation übergeben werden, ungehindert aus.

Besonders vorteilhaft ist das Verfahren dann, wenn die Vorrichtung zu einer vorbestimmten Ausgabestelle verfahren wird und das Förderband ein Auslagern der Ware aus dem Warenaufnahmebereich bewirkt. So wird ein Auslagerungszyklus der Ware, der mit dem Verlagern von einer Warenaufbewahrungsfläche zu einem Warenaufnahmebereich der Vorrichtung beginnt, an einer Ausgabestation beendet.

Ein bevorzugtes Ausführungsbeispiel der vorliegenden Erfindung wird nun anhand der beigefügten Zeichnungen näher beschrieben. Im Einzelnen zeigen
- Fig. 1: eine perspektivische Ansicht eines Lagersystems mit einer erfindungsgemäßen Verlagerungsvorrichtung,
- Fig. 2: eine Seitenansicht einer erfindungsgemäßen Verlagerungsvorrichtung, und
- Fig. 3: eine Draufsicht einer erfindungsgemäßen Verlagerungsvorrichtung.

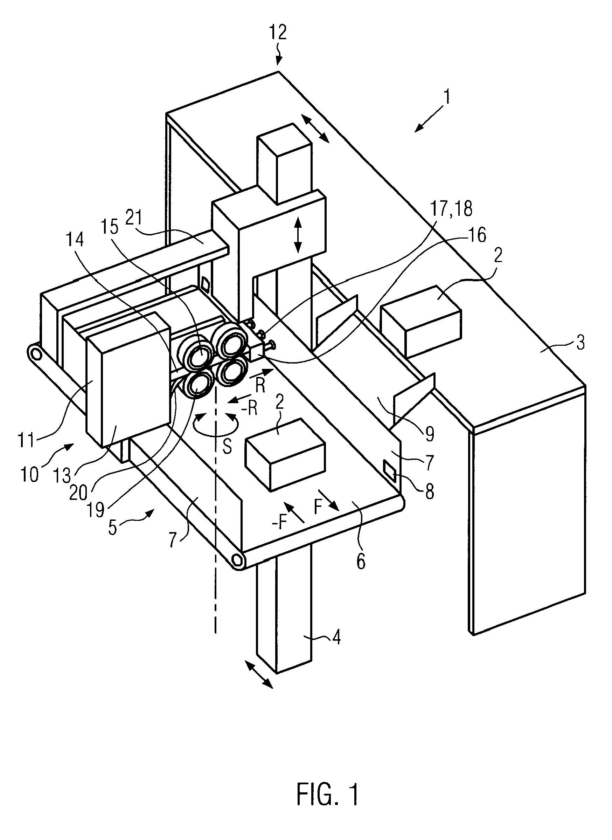

Fig. 1 zeigt einen Ausschnitt eines Lagersystems 12 mit einer erfindungsgemäßen Vorrichtung 1 zum Verlagern von Waren 2. Das Lagersystem 12 verfügt über zumindest eine Warenaufbewahrungsfläche 3, auf der Waren 2 abgelegt und gelagert werden können. Exemplarisch ist hier eine quaderförmige Ware 2 dargestellt, beispielsweise eine quaderförmige Verpackung, die auf der Warenaufbewahrungsfläche 3 abgelegt ist. Die Warenaufbewahrungsfläche 3 hat eine horizontale Ausrichtung und eine ebene Oberfläche. In dem Lagersystem 12 werden mehrere Warenaufbewahrungsflächen 3 vertikal übereinander angeordnet. Die Warenaufbewahrungsflächen 3 können in gleichmäßigen oder unterschiedlichen Abständen zueinander angeordnet sein. Gegebenenfalls könnte mindestens eine dieser Warenaufbewahrungsflächen 3 auch durch ein Fördermittel ersetzt sein, beispielsweise ein Förderband, mittels dessen Waren 2 transportiert werden können.

Vor den vertikal übereinander angeordneten Warenaufbewahrungsflächen 3 wird die erfindungsgemäße Vorrichtung 1 zum Verlagern von Waren 2, insbesondere also zum Ein-, Aus- oder Umlagern von Waren 2, mittels eines beweglichen Gestells 4 verfahren. Mittels eines Schienensystems (nicht dargestellt) kann das Gestell 4 parallel zu den Vorderkanten der Warenaufbewahrungsflächen 3 in Längsrichtung verfahren werden. Ein horizontaler Warenaufnahmebereich 5 ist über einen Tragarm 21 so am beweglichen Gestell 4 befestigt, dass er in vertikaler Richtung des Gestells 4 verfahren werden kann. Durch die Kombination der Horizontalbewegung des Gestells 4 und der Vertikalbewegung des Warenaufnahmebereichs 5 kann die erfindungsgemäße Verlagerungsvorrichtung 1 beliebige Positionen vor den horizontal ausgerichteten Warenaufbewahrungsflächen 3 einnehmen.

Der Warenaufnahmebereich 5 verfügt über eine Lagerfläche, die eine Fördereinrichtung in Form eines Förderbandes 6 ist. Die Förderrichtung F des Förderbandes 6 ist parallel zu der Längsseite der Warenaufbewahrungsflächen 3 ausgerichtet. Mit einem elektrischen Antrieb kann das Förderband 6 sowohl vorwärts, als auch rückwärts verfahren werden. Das Förderband 6 ist in Endlosbauweise ausgeführt und horizontal ausgerichtet, wobei es aus einem Material besteht, das die Haftreibungseigenschaft erhöht, beispielsweise Gummi.

Der Warenaufnahmebereich 5 hat eine rechteckige Form. Damit verfügt er über vier seitliche Flanken. Die Flanken in Längsrichtung sind länger als die Flanken in Querrichtung. An mindestens einer seitlichen Flanke wird eine Raumbegrenzung 7 vorgesehen. Die Raumbegrenzung ist eine Begrenzungswand 7, die sich über die gesamte Längsrichtung des Warenaufnahmebereichs 5 erstreckt und mit ihrer Fläche ein Herabfallen von auf dem Förderband 6 befindlichen Waren 2 verhindert.

Damit die Waren 2 von der Warenaufbewahrungsfläche 3 mühelos auf das Förderband 6 gelangen, ist eine Verbindungsoberfläche 9 vorgesehen, die so in Richtung Förderband 6 geneigt angebracht ist, dass sie eine Rutsche für die Waren 2 darstellt. Die Verbindungsoberfläche ist fest mit dem Warenaufnahmebereich 5 verbunden und hat zur Führung der herabrutschenden Waren seitliche Begrenzungswände. Die Verbindungsoberfläche 9 hat eine ebene Oberfläche und ist aus einem die Haftreibungseigenschaften vermindernden Material. Das Gestell 4 kann die gesamte Vorrichtung 1 so an eine Warenaufbewahrungsfläche 3 heranfahren, dass ein oberer Kontaktbereich der Verbindungsoberfläche 9 bündig an der Warenaufbewahrungsfläche 3 anliegt. Dann kann bei der Auslagerung die Ware 2 von der Warenaufbewahrungsfläche 3 über die Verbindungsoberfläche 9 auf das Förderband 6 rutschen.

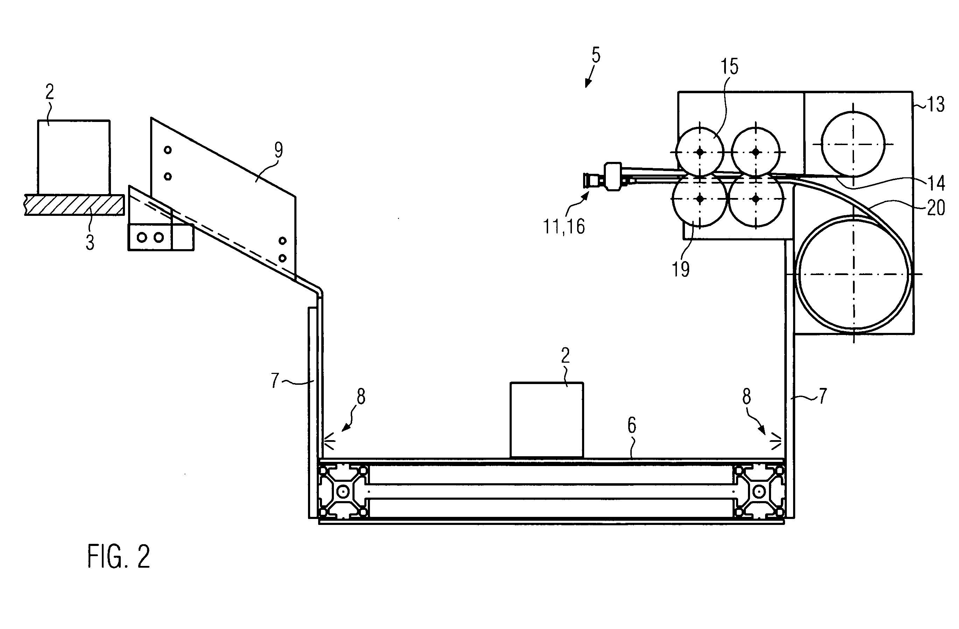

Um die Waren 2 zu verlagern, ist, wie in Fig. 2 dargestellt, eine Ansaugvorrichtung 11 vorgesehen. Die Ansaugvorrichtung 11 ist an dem Warenaufnahmebereich 5 befestigt. Sie nimmt somit an sämtlichen Bewegungen des Warenaufnahmebereichs 5 teil. Die Ansaugvorrichtung 11 verfügt über ein Gehäuse 13, in dem ein Stahlband 14 aufgewickelt ist. Außerhalb des Gehäuses 13 ist das Stahlband 14 nacheinander über zwei konvexe Rollen 15 geführt. Die Rollen 15 sorgen dafür, dass das Stahlband 14 auf der vom Gehäuse 13 abgewandten Seite gekrümmt ist, während es in dem Gehäuse 13 in flacher Form aufgewickelt werden kann. An dem vom Gehäuse 13 abgewandten Ende ist das Stahlband 14 mit einem Kopf 16 der Ansaugvorrichtung 11 verbunden. Dieser Einrichtungskopf 16 weist auf seiner Vorderseite 17 als Saugnäpfe ausgebildete Saugöffnungen 18 auf. Mittels einer nicht dargestellten Pneumatik kann an den Saugöffnungen 18 ein Unterdruck erzeugt werden, der eine vor dem Einrichtungskopf 16 befindliche Ware 2 ansaugt. Durch den an den Saugöffnungen 18 herrschenden Unterdruck wird die Ware fest vor dem Einrichtungskopf 16 gehalten.

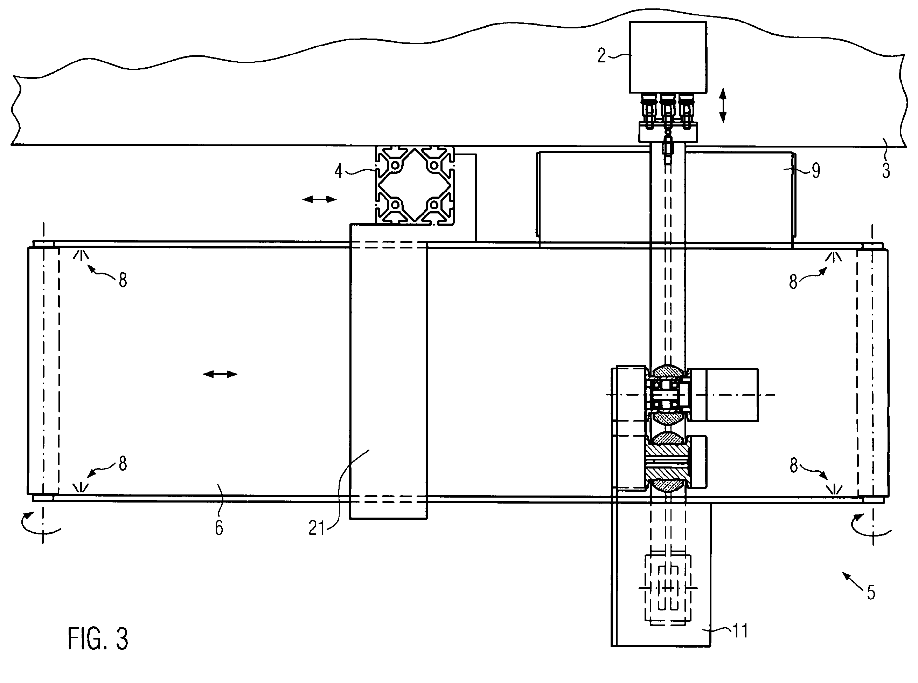

Wird das Stahlband 14 über die Rollen 15 aus dem Gehäuse 13 abgewickelt, so verschiebt sich der Kopf 16 der Ansaugvorrichtung 11 vom Gehäuse 13 weg in einer Verlagerungsrichtung R. Fig. 3 zeigt, wie eine auf der Warenaufbewahrungsfläche 3 befindliche Ware 2 von dem an sie herangefahrenen Einrichtungskopf 16 angesaugt wird. Wird das Stahlband 14 dann in dem Gehäuse 13 aufgewickelt, so verlagert sich der Einrichtungskopf 16 - und mit ihm die Ware 2 - in Richtung -R von der Warenaufbewahrungsfläche 3 auf das Förderband 6. Mit der Ansaugvorrichtung 11 können die Waren 2 auch auf der Warenaufbewahrungsfläche 3 verschoben werden. Dazu wird das Stahlband 14 über die Rollen 15 auf dem Gehäuse 13 abgewickelt und der Kopf 16 weiter in einer Verlagerungsrichtung R verschoben. Bei dieser Bewegung wird eine vor dem Kopf 16 befindliche Ware 2 in Richtung R verlagert und von dem Einrichtungskopf 16 geschoben. Wird während des Ansaugvorgangs auch noch das Gestell 4 bewegt, kann die Ware 2 in jede beliebige Position auf der Warenaufbewahrungsfläche 3 verschoben werden.

Über eine vertikale Schwenkachse S ist der Warenaufnahmebereich 5 schwenkbar mit dem Gestell 4 verbunden. Bei seiner Schwenkbewegung um die Schwenkachse S kann der Warenaufnahmebereich 5 zwei Endstellungen einnehmen. In der ersten Endstellung des Warenaufnahmebereichs 5 liegt die Verfahrrichtung F des Förderbandes 6 parallel zu der Vorderkante der Warenaufbewahrungsfläche 3.

Von dieser ersten Endstellung kann der Warenaufnahmebereich 5 in seine zweite Endstellung verschwenkt werden. Der Schwenkwinkel beträgt bis zu 180° und vorzugsweise 90°. In der zweiten Endstellung des Warenaufnahmebereichs 5 liegt die Förderrichtung F des Förderbandes 6 dann senkrecht zur Längsrichtung der Warenaufbewahrungsfläche 3. In dieser Position kann die Ware 2 direkt von der Warenaufbewahrungsfläche 3 auf das Förderband 6 gelangen, so dass keine Verbindungsoberfläche 9 nötig ist. Auch in dieser Stellung liegen die Oberfläche des Förderbandes 6 und die Warenaufbewahrungsfläche 3 wieder in einer gemeinsamen vertikalen Position. Folglich kann in dieser zweiten Endstellung des Warenaufnahmebereichs 5 eine auf dem Förderband 6 befindliche Ware 2 auf die Warenaufbewahrungsfläche 3 bewegt oder von dort auf das Förderband 6 übernommen werden.

In Fig. 2 ist zu sehen, dass die Einlaufkante der Verbindungsoberfläche 9 auf derselben Höhe liegt wie die Warenaufbewahrungsfläche 3. Knapp oberhalb dieser Ebene befindet sich der Kopf 16 der Ansaugvorrichtung 11, um eine auf der Warenaufbewahrungsfläche 3 befindliche Ware ergreifen und verlagern zu können. Das an dem Kopf 16 der Ansaugvorrichtung 11 befestigte Stahlband 14 ist nicht allein über eine konvexe Rolle 15 geführt, sondern zwischen der konvexen Rolle 15 und einer konkaven Gegenrolle 19 eingezwängt, um die dargestellte gekrümmte Form zu erhalten. In dieser gekrümmten Form ist das Stahlband 14 auch in seiner ausgefahrenen Position richtungsbeständig, da es sich kaum nach rechts oder links und nur äußerst geringfügig nach unten verbiegen lässt. Auch über längere Verlagerungsstrecken erhält das Stahlband 14 daher seine Richtung in der Verlagerungsrichtung R und R'. Im Gehäuse 13 der Ansaugvorrichtung 11 befindet sich eine Aufwickelvorrichtung (nicht gezeigt), auf die das Stahlband 14 in flacher Form aufgewickelt werden kann.

An der Ansaugvorrichtung 11 ist auch eine Luftleitung 20 dargestellt, die - ebenso wie das Stahlband 14 - an den Einrichtungskopf 16 angeschlossen ist. Sie steht dort mit den Saugöffnungen 18 in Wirkverbindung. Über die Luftleitung 20 kann Luft angesaugt werden, um an den Saugöffnungen 18 einen Unterdruck zu erzeugen und eine Ware 2 auf diese Weise sicher vor dem Einrichtungskopf 16 zu halten. Innerhalb des Gehäuses 13 befindet sich nicht nur eine Aufwickelvorrichtung (nicht dargestellt) für das Stahlband 14, sondern auch eine zweite Aufwickelvorrichtung (nicht dargestellt) zum Auf- und Abwickeln der Luftleitung bzw. des Pneumatik-Schlauches 20. Die Aufwickelvorrichtung (nicht dargestellt) kann leicht vorgespannt sein. Unter der Einwirkung der Rollen 15 und der Gegenrollen 19 auf das Stahlband 14 bewegt sich der Einrichtungskopf 16 relativ zu dem Warenaufnahmebereich 5 bzw. relativ zu dem Gehäuse 13. Bei dieser Bewegung fördert es die Luftleitung 20 mit.

In dem Warenaufnahmebereich 5 sind mehrere Lichtschranken 8 zur Überwachung von bestimmten Abschnitten des Warenaufnahmebereichs 5 angebracht.

In der bevorzugten Ausführungsform werden zwei Lichtschranken 8 für die Überwachung eines Kontrollraumes in dem Warenaufnahmebereichs 5 eingesetzt. Dabei sind die Lichtschranken 8, wie in Fig. 3 gezeigt, jeweils an einem Ende des Warenaufnahmebereichs 5 angeordnet, an dem das Förderband 6 seine horizontale Ausrichtung verlässt und um 180° umgelenkt wird, so dass sich zwei Endkanten ergeben, die den Warenaufnahmebereich 5 begrenzen. Der Sender der Lichtschranke 8 wird in einer seitlichen Begrenzungswand 7 und der Empfänger in einer gegenüberliegenden seitlichen Begrenzungswand 7 montiert. Die Lichtschranken 8 werden vertikal so angebracht, dass nur ein geringer Abstand zwischen der Oberfläche des Förderbands 6 und dem Erfassungsbereich der Lichtschranken 8 ist. Dadurch können auch Waren 2 mit geringen Abmessungen von den Lichtschranken 8 erfasst werden. Des Weiteren werden die Lichtschranken 8 horizontal in einem vorbestimmten Abstand zu den durch die Umlenkung des Förderbands 6 entstehenden Endkanten angebracht. Wie in Fig. 3 zu sehen ist, verbleibt somit ein ausreichender Sicherheitsabstand, der die Waren 2 an einem Herabfallen von dem Förderband hindert, sobald sie in den Erfassungsbereich der Lichtschranken 8 gelangen. Die Lichtschranke gibt ihr Signal an eine Steuereinheit weiter. Gelangt Ware 2 in den Kontrollraum der Lichtschranke, so registriert der Sensor 8 die Störung und gibt ein entsprechendes Signal aus. Da zwei Lichtschranken 8 vorgesehen sind, die jeweils einen Kontrollraum im Endbereich des Warenaufnahmebereichs 5 überwachen, kann keine Ware 2 unbeabsichtigt von dem Förderband 6 herabfallen. Denn wenn eine Ware 2 die Lichtschranke unterbricht, kann die Steuerungseinheit das Förderband 6 stoppen und in die entgegengesetzte Richtung laufen lassen, so dass die Ware den Endbereich wieder verlässt.

Der Betrieb des Lagersystems 12 und der Verlagerungsvorrichtung 1 erfolgt folgendermaßen: Zum Auslagern einer Ware 2 von der Warenaufbewahrungsfläche 3 wird die Ware 2 entweder von einem nicht dargestellten Ausstoßer, der sich auf der gegenüberliegenden Seite der Warenaufbewahrungsfläche 3 befindet, über eine Verbindungsoberfläche 9 auf das Förderband 6 gestoßen, oder die Ware 2 wird mittels der Ansaugvorrichtung 11 an die Verbindungsoberfläche herangezogen und gelangt über die geneigte Oberfläche dieses Bauteils auf das Förderband 6. Zuvor muss die Ansaugvorrichtung 11 und damit der gesamte Warenaufnahmebereich 5 mittels eines Gestells 4 so verfahren werden, dass die Saugöffnungen 18 des Kopfes 16 der Ansaugvorrichtung 11 an der Ware anliegt. Sobald ein Unterdruck erzeugt wird, fixiert dieser die Ware 2 vor dem Einrichtungskopf 16. Wird der Einrichtungskopf 16 mittels des Stahlbandes 14 in der Richtung R' zurückgezogen, so folgt die Ware 2 dem Kopf 16 und verlagert sich auf die geneigte Ebene der Verbindungsoberfläche 9. Von dort rutscht sie automatisch auf das Förderband 6, sobald die Pneumatik abgeschaltet wird.

In einer weiteren Ausführungsform kann das Förderband 6 auf eine Höhe verfahren werden, die mit der Warenaufbewahrungsfläche 3 fluchtet. Auf dem Förderband befindliche Ware kann dann von dem Kopf 16 der Ansaugvorrichtung 11 in Richtung R und somit von dem Förderband über eine waagerechte Verbindungsoberfläche auf die Warenaufbewahrungsfläche 3 geschoben werden.

In einer weiteren Ausführungsform werden mehrere Sensoren zur Überwachung des Warenaufnahmebereichs 5 eingesetzt. Durch die Signale der Sensoren 8 kann die Steuerung genau ermitteln, in welchem Bereich des Förderbandes Ware abgelegt wurde. Die leeren Flächen des Förderbandes können dann gezielt so verfahren werden, dass weitere Waren 2 durch die Ansaugvorrichtung 11von der Warenaufbewahrungsfläche 3 über die Verbindungsoberfläche 9 auf das Förderband 6 gezogen werden können.

Sollten sich mehrere Waren 2 übereinander stapeln, so kann das Förderband durch schnelles Wechseln zwischen den Förderrichtungen ein Vereinzeln der Waren hervorrufen.

In einer alternativen Ausführungsform kann auch nur ein Sensor 8 in dem Warenaufnahmebereich 5 vorgesehen sein und einen Flankenbereich überwachen. Die anderen seitlichen Flanken werden durch Begrenzungswände 7 abgesichert. Dann kann die Ware nur in einer Richtung ausgelagert werden.

In einer weiteren Ausführungsform ist es auch möglich, mit einer Lichtschranke nur einen Kontrollpunkt auf dem Förderband 6 zu überwachen.

Allgemein können die Lichtschranken 8 auch überwachen, ob überhaupt noch Ware 2 auf dem Förderband 6 liegt. Dann kann die Steuereinrichtung weitere Schritte ausführen und z.B. die Auslagerung sämtlicher Waren 2 oder ein weiteres Verlagern von Ware 2 von der Warenaufbewahrungsfläche 3 auf das Förderband 6 ermöglichen.

Wurde die gesamte nutzbare Oberfläche des Förderbandes 6 mit Waren 2 ausgefüllt, wird der letzte Schritt des Auslagerungsvorganges eingeleitet. Dazu verfährt das Gestell 4 die gesamte Vorrichtung 1 zu einer Ausgabestation des Lagersystems 12. An dieser Ausgabestation können die Waren 2 von dem Förderband ausgelagert werden. Dies kann z.B. per Hand, durch weitere Ansaug- bzw. Ausstoßvorrichtungen oder durch Bewegung des Förderbandes 6 geschehen.

Ausgehend von dem dargestellten Ausführungsbeispiel kann die Erfindung in vielfacher Weise abgewandelt werden. Beispielsweise kann die Fördereinrichtung statt des Förderbandes andere Fördermittel einsetzen, insbesondere Kugel-, Rollen- oder Luftkissenförderer. Statt der Ansaugvorrichtung 11 können auch Einrichtungen zum Greifen verwendet werden. Die Lichtschranken 8 können durch andere Sensoren wie z.B. Näherungsschalter oder andere Signalgeber ersetzt werden.

## Patentansprüche

1. Vorrichtung (1) für ein Verlagern von Waren (2) von oder zu einer Warenaufbewahrungsfläche (3), welche Vorrichtung (1) an einem beweglichen Gestell (4) angebracht ist und einen horizontalen Warenaufnahmebereich (5) aufweist, dem eine Fördereinrichtung (6) zugeordnet ist, **dadurch gekennzeichnet, dass** die Fördereinrichtung (6) ein Förderband mit einer Förderrichtung (F) ist.

2. Vorrichtung (1) nach Anspruch 1, **dadurch gekennzeichnet, dass** die Förderrichtung (F) des Förderbands (6) parallel zur Verfahrrichtung des Gestells (4) ist.

3. Vorrichtung (1) nach einem der vorangehenden Ansprüche, **dadurch gekennzeichnet, dass** mit dem Förderband (6) eine alternierende Bewegung in Richtung (F) und in umgekehrter Richtung (-F) zur Vereinzelung der Waren (2) ausführbar ist.

4. Vorrichtung (1) nach einem der vorangehenden Ansprüche, **dadurch gekennzeichnet, dass** das Förderband (6) eine Kommissioniereinrichtung für Waren (2) bildet.

5. Vorrichtung (1) nach einem der vorangehenden Ansprüche, **dadurch gekennzeichnet, dass** das Förderband (6) eine ebene Fläche aufweist.

6. Vorrichtung (1) nach einem der vorangehenden Ansprüche, **dadurch gekennzeichnet, dass** die Fläche des Förderbands (6) mit einem die Haftreibungseigenschaft erhöhendem Material versehen ist.

7. Vorrichtung (1) nach einem der vorangehenden Ansprüche, **dadurch gekennzeichnet, dass** das Förderband (6) an wenigstens einer Flanke eine seitliche Raumbegrenzung (7) aufweist.

8. Vorrichtung (1) nach Anspruch 7, **dadurch gekennzeichnet, dass** die Raumbegrenzung eine seitliche Begrenzungswand (7) ist.

9. Vorrichtung (1) nach Anspruch 8, **dadurch gekennzeichnet, dass** die seitliche Begrenzungswand (7) an einer gegenüber der Warenaufbewahrungsfläche (3) angeordneten Flanke des Förderbands (6) angebracht ist.

10. Vorrichtung (1) nach einem der Ansprüche 8 oder 9, **dadurch gekennzeichnet, dass** sich die seitliche Begrenzungswand (7) über die gesamte Längenausdehnung des Förderbands (6) erstreckt.

11. Vorrichtung (1) nach einem der vorangehenden Ansprüche, **dadurch gekennzeichnet, dass** die Fördereinrichtung (6) mindestens einen Sensor (8) zum Überwachen eines Kontrollpunktes oder eines 1-,2- oder 3-dimensionalen Raumes des Warenaufnahmebereichs (5) aufweist.

12. Vorrichtung (1) nach Anspruch 11, **dadurch gekennzeichnet, dass** mindestens ein Sensor (8) senkrecht zu der Förderrichtung (F) ausgerichtet ist.

13. Vorrichtung (1) nach einem der Ansprüche 11 oder 12, **dadurch gekennzeichnet, dass** der Sensor (8) an mindestens einer seitlichen Begrenzungswand (7) angebracht ist.

14. Vorrichtung (1) nach einem der Ansprüche 11 bis 13, **dadurch gekennzeichnet, dass** als Sensor (8) eine oder mehrere Lichtschranken vorgesehen sind.

15. Vorrichtung (1) nach Anspruch 11 bis 14, **dadurch gekennzeichnet, dass** eine Leuchtquelle mindestens eines Sensors (8) zur Abtastung eines Bereichs des Warenaufnahmebereichs (5) und insbesondere eines Endabschnitts des Warenaufnahmebereichs (5) vorgesehen ist.

16. Vorrichtung (1) nach einem der vorangehenden Ansprüche, **dadurch gekennzeichnet, dass** mehrere Warenaufnahmebereiche (5) übereinander angebracht sind.

17. Vorrichtung (1) nach einem der vorangehenden Ansprüche, **dadurch gekennzeichnet, dass** die Fördereinrichtung (6) bündig an die Warenaufbewahrungsfläche (3) heranfahrbar ist.

18. Vorrichtung (1) nach einem der vorangehenden Ansprüche, **dadurch gekennzeichnet, dass** zwischen der Warenaufbewahrungsfläche (3) und der Fördereinrichtung (6) eine Verbindungsoberfläche (9) ist.

19. Vorrichtung (1) nach Anspruch 18, **dadurch gekennzeichnet, dass** die Verbindungsoberfläche (9) in Richtung der Fördereinrichtung (6) geneigt ausgebildet ist.

20. Vorrichtung (1) nach einem der Ansprüche 18 oder 19, **dadurch gekennzeichnet, dass** die Verbindungsoberfläche (9) bündig an die Warenaufbewahrungsfläche (3) heranfahrbar ist.

21. Vorrichtung (1) nach einem der vorangehenden Ansprüche, **dadurch gekennzeichnet, dass** die Fördereinrichtung (6) eine in etwa vertikale Schwenkachse (S) aufweist, um welche die Fördereinrichtung (6) zwischen einer ersten Endstellung und einer zweiten Endstellung schwenkbar ist.

22. Vorrichtung (1) nach Anspruch 21, **dadurch gekennzeichnet, dass** der Schwenkwinkel zwischen den beiden Endstellungen der Fördereinrichtung (6) in etwa 90° beträgt.

23. Vorrichtung (1) nach einem der vorangehenden Ansprüche, **dadurch gekennzeichnet, dass** die Fördereinrichtung (6) eine im Wesentlichen rechteckige Form hat.

24. Vorrichtung (1) nach einem der Ansprüche 21 bis 23, **dadurch gekennzeichnet, dass** die Schwenkachse (S) am Rand der Fördereinrichtung (6) oder außerhalb der Fördereinrichtung (6) angeordnet ist.

25. Vorrichtung (1) nach einem der Ansprüche 21 bis 24, **dadurch gekennzeichnet, dass** die Schwenkachse (S) nahe oder in einer Ecke der Fördereinrichtung (6) angeordnet ist.

26. Vorrichtung (1) nach einem der vorangehenden Ansprüche, **dadurch gekennzeichnet, dass** die Vorrichtung eine Warenverlagerungseinrichtung (10) aufweist.

27. Vorrichtung (1) nach Anspruch 26, **dadurch gekennzeichnet, dass** die Warenverlagerungseinrichtung (10) an die Schwenkbewegung der Fördereinrichtung (6) gekoppelt ist.

28. Vorrichtung (1) nach einem der Ansprüche 26 oder 27, **dadurch gekennzeichnet, dass** die Warenverlagerungseinrichtung (10) eine Ansaugvorrichtung (11) zum Ansaugen einer Ware (2) aufweist.

29. Vorrichtung (1) nach Anspruch 28, **dadurch gekennzeichnet, dass** die Ansaugvorrichtung (11) zum Ausstoßen der Ware (2) einsetzbar ist.

30. Vorrichtung (1) nach einem der vorangehenden Ansprüche, **dadurch gekennzeichnet, dass** die Vorrichtung (1) eine Steuerungseinheit zum Verarbeiten der Signale des mindestens einen Sensors (8) und zum Steuern der Bewegung der Fördereinrichtung (6) aufweist.

31. Verfahren für ein Verlagern von Waren (2) von oder zu einer Warenaufbewahrungsfläche (3), wobei Waren (2) in einem Warenaufnahmebereich (5) einer Vorrichtung (1) abgelegt werden und die Vorrichtung (1) durch ein bewegliches Gestell (4) bewegt wird und in eine mit der Warenaufbewahrungsfläche (3) abgestimmte Position verfährt,
**dadurch gekennzeichnet, dass** mehrere Waren (2) in zeitlichem Abstand in dem Warenaufnahmebereich (5) abgelegt werden und die Waren in seitliche Bereiche des Warenaufnahmebereichs (5) verfahren werden, um in einem mittleren Abschnitt des Warenaufnahmebereichs (5) Platz für weitere Waren (2) zu schaffen.

32. Verfahren nach Anspruch 31, **dadurch gekennzeichnet, dass** die Waren mittels eines den Warenaufnahmebereich (5) definierenden Förderbands (6) bewegt werden.

33. Verfahren nach einem der Ansprüche 31 oder 32, **dadurch gekennzeichnet, dass** eine Steuerungseinheit zum Verarbeiten der Signale der an der Vorrichtung (1) angebrachten Sensoren (8) die Signale in Abhängigkeit von verschiedenen Betriebszuständen verarbeitet.

34. Verfahren nach einem der Ansprüche 31 bis 33, **dadurch gekennzeichnet, dass** an dem Förderband (6) angebrachte Lichtschranken (8) während eines vorbestimmten Kommissioniermodus ein Signal zum Anhalten des Förderbands (6) ausgeben, wenn Ware (2) den Warenaufnahmebereich (5) überschreitet.

35. Verfahren nach einem der Ansprüche 31 bis 34, **dadurch gekennzeichnet, dass** an dem Förderband (6) angebrachte Lichtschranken (8) während eines vorbestimmten Auslagerungsmodus kein Signal zum Anhalten des Förderbands (6) ausgeben, wenn Ware (2) den Warenaufnahmebereich (5) überschreitet.

36. Verfahren nach einem der Ansprüche 31 bis 35, **dadurch gekennzeichnet, dass** die Vorrichtung (1) zu einer vorbestimmten Ausgabestelle verfahren wird und das Förderband (6) ein Auslagern der Ware (2) aus dem Warenaufnahmebereich (5) bewirkt.
